# FASCICULE DE BREVET EUROPEEN

(11) **EP 1 175 016 B1**
(45) Date de publication et mention de la délivrance du brevet: **20.02.2008**
(21) Numéro de dépôt: 01401902.0
(22) Date de dépôt: 16.07.2001
(51) Int. Cl.: H04B 1/16

(54) **Circuit intégré pouvant fonctionner en des modes actif et inactif et appareil comportant un tel circuit**
Integrierte Schaltung mit aktiven und inaktiven Betriebsmodus und Vorrichtung die diese Schaltung enthält
Integrated circuit with active and inactive mode of operation and apparatus comprising such circuit

(30) Priorité: 18.07.2000 FR 0009400
(43) Date de publication de la demande: 23.01.2002
(73) Titulaire: Alcatel Lucent, 75008 Paris (FR)
(72) Inventeur: Fermy, Alain, 13400 Aubagne (FR); Castel, Dominique, 92110 Clichy (FR)
(74) Mandataire: Korakis-Ménager, Sophie

(56) Documents cités:
- EP-A- 0 865 167
- EP-A- 0 939 495
- US-A- 4 989 261

## Description

La présente invention se situe dans le domaine des appareils et instruments électroniques portables présentant un mode actif ou de fonctionnement normal et un mode ou état inactif, d'attente ou de veille, durant lequel quelques fonctions basiques seulement sont opérationnelles, et concerne plus particulièrement les appareils de radiocommunication, notamment cellulaires.

L'invention a pour objet un circuit intégré pour un appareil du type précité présentant en mode veille une consommation très faible ainsi qu'un appareil du type appareil de radiocommunication mobile ou portable comprenant un tel circuit intégré.

La réduction de la consommation électrique, et le gain résultant en autonomie de fonctionnement, est un paramètre essentiel et un soucis permanent dans la conception et l'élaboration d'appareils ou d'instruments portables, renfermant leur propre source d'alimentation électrique.

Compte tenu de cet impératif, les constructeurs de tels appareils ont très rapidement défini, en plus des états MARCHE (allumé) et ARRET (éteint), un mode de fonctionnement dit "d'attente" ou de "veille" (en anglais "standby") correspondant à un mode de fonctionnement réduit en état MARCHE, pendant lequel la consommation est faible et seules quelques fonctions élémentaires essentielles sont actives (horloges internes, registres actifs, ...).

Tel est notamment le cas pour les appareils de télécommunications, en particulier les téléphones portables ou cellulaires.

Ainsi, par exemple, pour un terminal GSM (pour "Global System for Mobile" ou système global pour portatifs) ou UMTS (pour « Universal Mobile Telecommunications System » ou système de télécommunication universel pour mobile, également connu sous le terme de troisième génération), une fonction du circuit spécifique de bande de base numérique est toujours active lorsque ledit terminal est allumé ou en état MARCHE : il s'agit du module 32 kHz.

Ce module est principalement composé d'un oscillateur, de registres et de compteurs et demeure alimenté et actif pendant le mode de fonctionnement ou état MARCHE / veille (faible consommation). Ce module permet de conserver localement le temps GSM lorsque l'oscillateur principal de l'appareil commandé en tension est arrêté et qu'aucune liaison radio n'est établie. Il permet en outre de "réveiller" ou de commander le passage en mode actif du terminal considéré, après chaque période de mise en veille de ce dernier.

Ce module 32 kHz étant actuellement intégré dans le circuit spécifique de bande de base, il est nécessaire de maintenir ce circuit alimenté même pendant les périodes de mise en veille du terminal.

Bien que pénalisante, une telle alimentation d'un circuit complet dont seule une fonction particulière est effectivement active peut être acceptée actuellement puisque la fuite statique par transistor est de l'ordre de picoampères / micron.

Le circuit spécifique de bande de base intégrant généralement moins de dix millions de transistors, il en résulte un courant de fuite statique global, pour la totalité du circuit intégré, de moins de 100 microampères. Ces valeurs correspondent à des transistors du type CMOS jusqu'à 0,25 micron, éventuellement jusqu'à 0,18 micron avec des dispositions particulières.

Toutefois, les nouvelles générations de circuits intégrés obtenus par les procédés CMOS, pour des largeurs de gravure ou de pistes de l'ordre de 0,10 micron présenteront une fuite statique d'environ 20 nanoampères / micron (voir notamment "International Technology Roadmap for Semiconductors", 1999, SEMATECH). Il en résultera une fuite statique globale pour l'ensemble du circuit de bande de base GSM pouvant atteindre des valeurs de l'ordre de 100 milliampères, ce qui serait supérieur à la consommation en courant en mode actif en cours de communication.

Pour tenter de pallier les inconvénients précités, il a été proposé, notamment dans le document EP-A-0 939 495, d'extraire le module 32 kHz du circuit spécifique de bande de base numérique et de le réaliser dans un composant séparé distinct du circuit spécifique précité, ou de l'intégrer dans un autre circuit spécifique de taille inférieure telle que le circuit de gestion de l'alimentation.

Ceci entraîne une séparation de la fonction "temps GSM" et son implémentation partielle dans deux circuits distincts, à savoir le circuit de gestion de l'alimentation et le circuit de bande de base numérique, et donc une nouvelle conception de l'architecture de ces derniers.

Il en résulte nécessairement des échanges d'informations entre ces deux circuits, notamment pour mettre à jour ou resynchroniser le temps GSM, relativement délicats à gérer.

La présente invention a notamment pour but de proposer une solution permettant une réduction importante de la consommation durant les périodes en mode inactif ou de veille du terminal, tout en évitant les inconvénients de la solution précitée.

A cet effet, la présente invention a pour objet un circuit intégré pour appareil ou instrument électronique portable, pouvant fonctionner alternativement en un mode actif et en un mode inactif et comprenant un module fonctionnel réalisant des fonctions de commande dudit appareil ou instrument, en mode actif et en mode inactif de ce dernier, ledit module commandant le passage de l'appareil ou de l'instrument en mode actif, caractérisé en ce que ledit module comporte une alimentation propre, indépendante de l'alimentation du circuit qui l'intègre, et en ce que ce dernier comporte des moyens d'isolation électrique dudit module et de ladite alimentation propre, par rapport au reste du circuit intégré.

L'invention propose par conséquent de conserver le module dans le circuit intégré concerné, ce qui permet d'éviter toute modification importante de l'architecture de ce dernier, tout en le munissant de moyens d'alimentation séparés et en l'isolant de son environnement pour éviter toute propagation énergétique au reste du circuit, lorsque ce dernier n'est pas alimenté.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est un schéma synoptique d'un radiotéléphone mobile comprenant un circuit intégré selon l'invention, et,
la figure 2 est un schéma synoptique d'un commutateur ou interrupteur électronique faisant partie du circuit intégré représenté sur la figure 1.

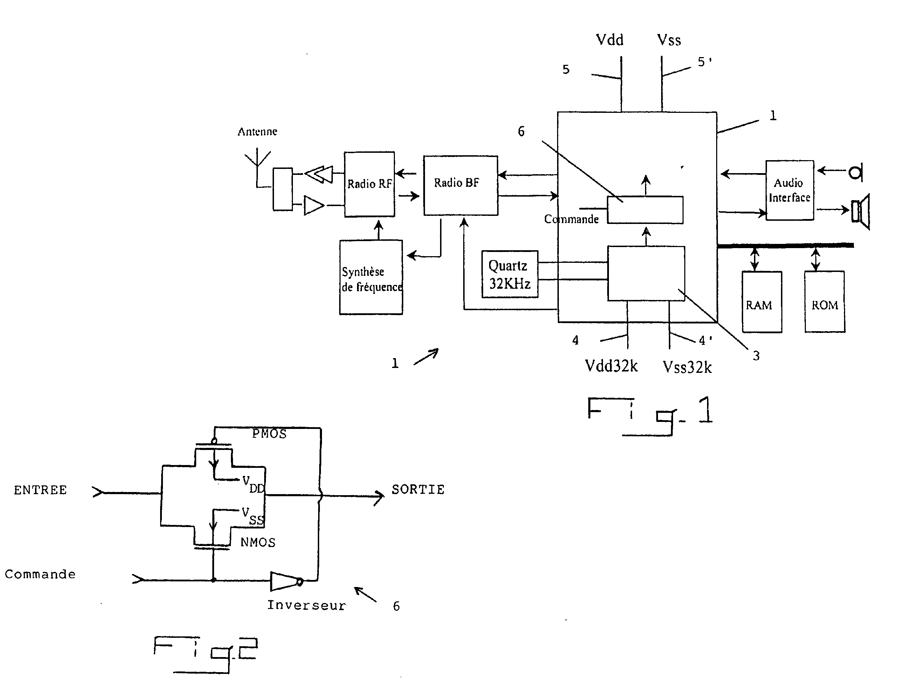

Comme le montre la figure 1 des dessins annexés, un radiotéléphone mobile est principalement composé de moyens d'émission-réception radio, d'une alimentation, d'une interface utilisateur et d'une fonction bande de base numérique, objet de la présente invention.

La fonction bande de base numérique réalise différents traitements, tels que par exemple, en réception, la synchronisation avec le réseau, la démodulation des paquets (connus sous le terme anglais de burst) provenant de la fonction radio, le déchiffrement, le désentrelacement, le décodage canal, le traitement de la signalisation ou le décodage de la parole. En émission, la fonction bande de base numérique réalise par exemple le codage de la parole transmise par la fonction radio, le codage canal, l'entrelacement, la formation des paquets à transmettre à la fonction radio, le chiffrement.

La fonction bande de base numérique comporte donc une interface avec la radio pour l'émission et la réception de paquets de parole, de donnée, ou de signalisation, ainsi qu'une interface avec un convertisseur audio sur lequel se connectent un microphone et un haut-parleur.

Le circuit intégré selon l'invention est la composante principale de la fonction bande de base numérique. CE circuit comporte un module fonctionnel de commande du radiotéléphone en mode actif ou inactif. Selon l'invention, le module 3 comporte une alimentation 4, 4' propre, indépendante de l'alimentation 5, 5' du circuit 1 qui l'intègre, ce dernier comportant un ou des moyens 6 d'isolation électrique dudit module 3 et de ladite alimentation propre 4, 4', par rapport au reste du circuit intégré 1.

Préférentiellement, l'alimentation propre du module 3 peut consister en une borne 4 ou pastille positive (V_{DD}) et une borne 4' ou pastille négative (V_{SS}) spécifiques, reliées à des bus d'alimentation correspondants connectés aux différents composants constitutifs élémentaires dudit module 3.

De manière avantageuse, l'isolation électrique est réalisée par l'intermédiaire de commutateur(s) ou d'interrupteur(s) électronique(s).

La figure 2 montre, à titre d'exemple non limitatif, une possibilité de réalisation d'un commutateur 6 au moyen de deux transistors, un transistor PMOS et un transistor NMOS.

Lorsque le signal de commande ("Commande") du commutateur 6 est égal à 1, alors SORTIE = ENTREE.

Lorsque le signal de commande est égal à 0, alors la liaison entre SORTIE et ENTREE est coupée.

Selon l'état du signal de commande, le commutateur 6 autorise ou non le transfert des signaux de sortie du module 3.

Le transfert est autorisé lorsque le circuit intégré 1 est alimenté, donc en mode actif de ce dernier.

En mode inactif ou de veille, les alimentations V_{DD} et V_{SS} du circuit intégré 1 ne sont pas valides et il faut alors isoler la sortie du module 3 pour éviter une autoalimentation du reste dudit circuit intégré 1, par ouverture du commutateur 6.

Dans l'application préférentielle de l'invention à un appareil 2 de radiocommunication, tel qu'un portable GSM, le circuit intégré 1 correspondra au circuit spécifique de bande de base numérique et le module fonctionnel 3 correspondra à un module intégrant une horloge de basse fréquence et faisant partie dudit circuit 1, par exemple le module 32 kHz.

La présente invention a également pour objet, comme le montre la figure 1 des dessins annexés, un appareil 2 de radiocommunication mobile ou portable, notamment téléphone cellulaire du type GSM, caractérisé en ce qu'il comporte un circuit bande de base numérique 1 tel que décrit ci-dessus.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

1. Circuit intégré pour appareil ou instrument électronique portable, pouvant fonctionner alternativement en un mode actif et en un mode inactif et comprenant un module fonctionnel réalisant des fonctions de commande dudit appareil ou instrument, en mode actif et en mode inactif de ce dernier, ledit module commandant le passage de l'appareil ou de l'instrument en mode actif, **caractérisé en ce que** ledit module (3) comporte une alimentation (4, 4') propre, indépendante de l'alimentation (5, 5') du circuit (1) qui l'intègre, et **en ce que** ce dernier comporte un ou des moyens (6) d'isolation électrique dudit module (3) et de ladite alimentation propre (4, 4'), par rapport au reste du circuit intégré (1).

2. Circuit intégré selon la revendication 1, **caractérisé en ce que** l'alimentation propre (4, 4') du module (3) consiste en une borne ou pastille positive et une borne ou pastille négative spécifiques, reliées à des bus d'alimentation correspondants.

3. Circuit selon l'une quelconque des revendications 1 et 2, **caractérisé en ce que** l'isolation électrique est réalisée par l'intermédiaire de commutateur(s) ou d'interrupteur(s) électronique(s) (6).

4. Circuit selon l'une quelconque des revendications 1 à 3, **caractérisé en ce qu'**il consiste en un circuit spécifique de bande de base numérique.

5. Circuit selon la revendication 4, **caractérisé en ce que** le module fonctionnel (3) correspond à un module intégrant une horloge de basse fréquence.

6. Appareil de radiocommunication mobile ou portable, notamment téléphone cellulaire du type GSM et/ou UMTS, **caractérisé en ce qu'**il comporte un circuit bande de base numérique (1) selon l'une quelconque des revendications 1 à 5.

## Claims

1. Integrated circuit for a portable electronic device or instrument able to operate in an active mode or in an inactive mode and including a functional module implementing control functions of said device in the active mode and the inactive mode thereof, said module controlling switching of the device to the active mode, **characterised in that** said module (3) includes its own power supply unit (4.4'), independent of power supply arrangements (5,5') of the circuit
(1) in which it is integrated, and **in that** the latter includes one or more means
(6) for electrically isolating said module (3) and its own said power supply unit (4,4') from the remainder of the integrated circuit (1).

2. lntergrated circuit according to claim 1, **characterised in that** the power supply unit (4,4') of the module (3) has a dedicated positive patch or boundary worker and a dedicated negative patch or boundary worker connected to corresponding power supply buses.

3. Intergrated circuit according to either of claims 1 and 2, **characterised in that** the electrical isolation is provided by an electronic switch or electronic switches (6).

4. Intergrated circuit according to any one of claims 1 to 3, **characterised in that** it is in the form of a digital baseband dedicated circuit.

5. Intergrated circuit according to claim 4, **characterised in that** the functional module (3) corresponds to a module integrating a low-frequency clock,

6. Portable or mobile radio communication device, in particular a GSM and/or UMTS cellular telephone, **characterised in that** it comprises a digital baseband circuit (1) according to any one of claims 1 to 5.

## Patentansprüche

1. Integrierte Schaltung für eine tragbare elektronische Vorrichtung oder ein elektronisches Gerät, die/das abwechselnd in einem aktiven und in einem inaktiven Betriebsmodus funktionieren kann, und ein Funklionsmodul einschließt, das Steuerungs funktionen dieser Vorrichtung oder dieses Geräts im aktiven und im inaktiven Betriebsmodus der/desselben durchführt, wobei dieses Modul die Umschaltung der Vorrichtung oder des Geräts in den aktiven Modus steuert, **dadurch gekennzeichnet, dass** dieses Modul (3) eine eigene Stromversorgung (4,4') einschließt, die von der Stromversorgung (5, 5') der Schaltung (1), die es integriert, unabbängig ist, und **dadurch gekennzeichnet, dass** letztere ein oder mehrere Mittel (6) zur elektrischen Isolierung dieses Moduls (3) und dieser eigenen Stromversorgung (4,4') bezogen auf den Rest der Integrierten Schaltung (1) enthält.

2. Integrierte Schaltung gemäß Anspruch 1, **dadurch gekennzeichnet, dass** die eigene Stromversorgung (4, 4') des Moduls (3) aus einer spezifischen positiven Klemme oder einem positiven Chip und einer spezifischen negativen Klemme oder einem negativen Chip besteht, die mit entsprechenden Versorgungsbussen verbunden sind.

3. Schaltung gemäß Anspruch 1 oder Anspruch 2, **dadurch gekennzeichnet, dass** die elektrische Isolierung mittels elektronischem(n) Schalter(n) oder Unterbrecher(n) (6) erfolgt.

4. Schaltung gemäß einem der Ansprüche 1 bis 3, **dadurch gekennzeichnet, dass** sie aus einer spezifischen digitalen Basisbandschaltung besteht.

5. Schaltung gemäß Anspruch 4, **dadurch gekennzeichnet, dass** das Funktionsmodul (3) einem Modul entspricht, das eine Niederfrequenzuhr integriert.

6. Mobile oder tragbare Vorrichtung für die Funkkommunikation, insbesondere Handy vom Typ GSM und/oder UMTS, **dadurch gekennzeichnet, dass** sie eine digitale Basisbandschaltung (1) gemäß einem der Ansprüche 1 bis 5 einschließt.
